# EUROPÄISCHE PATENTSCHRIFT

(11) **EP 1 310 095 B1**
(45) Veröffentlichungstag und Bekanntmachung des Hinweises auf die Patenterteilung: **06.01.2010**
(21) Anmeldenummer: 01956568.8
(22) Anmeldetag: 26.07.2001
(51) Int. Cl.: H04N 7/18, G01G 19/40

(54) **Überwachungssystem mit Anzeigeeinrichtung als Bestandteil einer Waage**
Surveillance system with display device as component of a weighing machine
Système de surveillance avec dispositif d'affichage comme composant d'une balance

(30) Priorität: 14.08.2000 DE 10039667
(43) Veröffentlichungstag der Anmeldung: 14.05.2003
(73) Patentinhaber: Mettler-Toledo (Albstadt) GmbH, 72458 Albstadt (DE)
(72) Erfinder: WALLISCH, Gebhard, 72393 Burladingen (DE); MÜRDTER, Herbert, Tailfingen, 72461 Albstadt (DE); MORITZ, Holger, Ebingen, 72458 Albstadt (DE)
(74) Vertreter: Leinweber & Zimmermann
(86) Internationale Anmeldenummer: PCT/EP2001/008677
(87) Internationale Veröffentlichungsnummer: WO 2002/015580

(56) Entgegenhaltungen:
- EP-A- 0 443 419
- DE-A- 3 702 312
- DE-A- 19 820 636
- US-A- 4 237 483
- US-A- 5 216 502

## Beschreibung

Die Erfindung betrifft ein Überwachungssystem nach dem Oberbegriff des Patentanspruchs 1.

In Supermärkten und Lagern werden Waagen eingesekt. Üblicherweise muß zum Betreiben dieser Geräte Verkaufspersonal eingesetzt werden. Insbesondere beim Einsatz derartiger Geräte in Supermärkten kommt es jedoch häufig vor, daß die mit diesem Gerät ausgestatteten Verkaufsbereiche, wie etwa die Kassenbereiche, Verkaufstheken für Wurst, Käse, Obst o. dgl. zeitweise nur einen geringen Kundenandrang zu verzeichnen haben. Dennoch müssen in der Regel sämtliche Verkaufsbereiche fortlaufend durch entsprechendes Verkaufspersonal zur Bedienung der waagen betreut werden, weil die Bedienung der Kunden zu jedem Zeitpunkt und in allen Verkaufsbereichen sicherzustellen ist. Überwachungssysteme gemäß dem Oberbegriff des Patentanspruchs 1 sind in der US-A-5 216 502, der DE 3 702 312 A und der US-A-4 237 483 angegeben.

Daraus ergibt sich das Problem einer zumindest zeitweiligen mangelnden Auslastung des Verkaufspersonals.

Angesichts dieses Problems liegt der Erfindung die Aufgabe zugrunde Überwachungssysteme der eingangs beschriebenen Art bereitzustellen, mit denen das Verkaufspersonal auch bei geringem Kundenandrang in den entsprechenden Verkaufsbereichen sinnvoll ausgelastet werden kann.

Erfindungsgemäß wird dieses Problem durch die im kennzeichnenden Teil des Patentanspruchs 1 angegebene Weiterbildung der bekannten Überwachungsssysteme gelöst.

Diese Erfindung beruht auf der Erkenntnis, daß die Leistungsfähigkeit der Anzeigeeinrichtungen moderner Waagen, die üblicherweise in Form von Kathodenstrahlröhren, LCD-Bildschirmen, Plasmabildschirmen o. dgl. gebildet sind, über die Sichtdarstellung warenbezogener Daten weit hinausgeht und auch die Sichtdarstellung von beispielsweise mit einer Überwachungskamera aufgenommenen Bildern des Geschäftes erlaubt. Ausgehend von dieser Erkenntnis wird mit der vorliegenden Erfindung durch Anpassung der übrigen Hardware der Waage an diese Fähigkeit der Anzeigeeinrichtung die Möglichkeit geschaffen, Waagen zu Zeiten geringer Auslastung der Verkaufsbereiche, an denen diese aufgestellt sind, zur Überwachung anderer Verkaufsbereiche einzusetzen. Mit Hilfe der erfindungsgemäß weitergebildeten Waagen kann das Verkaufspersonal selbst bei einer geringen Frequentierung einzelner Verkaufsbereiche sinnvoll ausgelastet werden, indem dem Verkaufspersonal zusätzlich eine Überwachungsaufgabe zugeordnet wird. Dadurch kann das ansonsten zur Ausübung der Überwachungstätigkeit erforderliche Überwachungspersonal zumindest teilweise eingespart werden. Darüber hinaus wird erfindungsgemäß ein besonders preiswertes Überwachungssystem bereitgestellt, weil einzelne Elemente der ohnehin benötigten Verkaufsgeräte, nämlich deren Anzeigeeinrichtung gleichzeitig auch noch als Teil des Überwachungssystems eingesetzt werden können, so daß die Anschaffung besonderer Überwachungsmonitore nicht mehr erforderlich ist. Dabei können durch Wahl entsprechender Treiberschaltungen für die erfindungsgemaß verwendeten Waagen herkömmliche Überwachungskameras zum Erzeugen der die Bilder des Geschäftes darstellenden Signale eingesetzt werden, so daß im Vergleich zu herkömmlichen Überwachungssystemen auch keine Zusatzkosten im Zusammenhang mit der Anschaffung besonderer, an die erfindungsgemäß verwendeten Waagen angepaßter Überwachungskameras anfallen. Die Bildsignale der Überwachungskameras können über entsprechende Signalleitungen an die Waagen angelegt werden. Daneben ist jedoch auch an eine drahtlose Übertragung der Bildsignale gedacht. Zur Übertragung der Bildsignale können auch ggf. bereits vorhandene LAN-Verbindungen, das Internet oder ein Intranet eingesetzt werden.

Im Vergleich zu herkömmlichen, ebenfalls vom Verkaufspersonal benutzbaren Überwachungssystemen mit Überwachungsspiegeln bietet der Einsatz eines erfindungsgemäß weitergebildeten Überwachungssystems den Vorteil, daß durch entsprechende Anbringung der Überwachungskameras das gesamte Verkaufsgeschäft nahezu lückenlos überwacht werden kann und darüber hinaus vom Verkaufspersonal an den Verkaufsständen eine Überwachung von Nebenräumen vorgenommen werden kann. Als weiterer Vorteil der erfindungsgemäßen Verwendung von Waagen zur Überwachung von Geschäftsräumen ist die Tatsache zu nennen, daß die Anzahl der Überwachungsposten und die Anzahl des Überwachungspersonals und damit die Wirksamkeit des Überwachungssystems im Vergleich zu herkömmlichen Überwachungssystemen erhöht werden kann, ohne daß dadurch zusätzliche Personalkosten entstehen.

Die Wirksamkeit eines erfindungsgemäßen Überwachungssystems kann dadurch erhöht werden, daß zwei oder mehr Überwachungskameras in dem Geschäft installiert werden. In diesem Fall hat es sich als günstig erwiesen, wenn die Treiberschaltung des erfindungsgemäßen Überwachungssystems zum Empfangen von Bildsignalen von mindestens zwei Signalquellen, wie etwa zwei Überwachungskameras, und zum Ansteuern der Anzeigeeinrichtung zur Sichtdarstellung der von den Bildsignalen einer oder mehrerer Signalquellen dargestellten Bilder betreibbar ist. Dabei ist einerseits an solche Ausführungsformen gedacht, bei denen zwei oder mehr Bilder gleichzeitig in entsprechenden Fenstern der Anzeigeeinrichtung dargestellt werden. Daneben ist aber auch an die Sichtdarstellung nur eines Bildes gedacht, wobei die entsprechende Signalquelle, deren Bildsignale zur Sichtdarstellung gebracht werden sollen, frei wählbar ist. Zu diesem Zweck kann der Treiberschaltung eine ggf. getrennt von der Waage zentral angeordnete Übertragungseinrichtung vorgeschaltet sein, mit der die Bildsignale an die Treiberschaltung übertragen werden, wobei diese Übertragungseinrichtung zum selektiven Übertragen der Bildsignale einer oder mehrerer Signalquellen an eine oder mehrere Treiberschaltungen ausgelegt ist. Auf diese Weise kann unter Verwendung von nur einer zentralen Übertragungseinrichtung eine Vielzahl von erfindungsgemäß verwendeten Waagen mit Bildsignalen versorgt werden, wobei mit der zentralen Übertragungseinrichtung gleichzeitig bestimmt wird, welche Bildsignale an die einzelnen Waagen übertragen und dort zur Anzeige gebracht werden. Alternativ oder zusätzlich kann auch die Waage selbst mit einer Wähleinrichtung zum Auswählen der Signalquelle ausgestattet sein, deren Bildsignale zur Ansteuerung der Anzeigeeinrichtung benutzt werden. In diesem Fall kann die Waage selbst als zentrale Überwachungseinheit für eine Vielzahl von erfindungsgemäß verwendeten Waagen eingesetzt werden, wenn die Wähleinrichtung auch noch zum Auswählen derjenigen Signalquellen betreibbar ist, deren Bildsignale zur Ansteuerung der Anzeigeeinrichtung eines oder mehrerer weiterer Verkaufsgeräte benutzt werden sollen.

In vielen Fällen soll nur ein ausgewählter, besonders vertrauenswürdiger Teil des Verkaufspersonals für die Überwachungstätigkeit eingesetzt werden. Dazu können die erfindungsgemäß verwendeten Waagen mit einer benutzerbezogene Daten empfangenden Freigabeeinrichtung ausgestattet werden, mit der in Abhängigkeit von den benutzerbezogenen Daten die Sichtdarstellung der von den Bildsignalen dargestellten Bilder freigebende Freigabesignale erzeugt werden. Diese benutzerbezogenen Daten können beispielsweise in Form eines sogenannten Anmeldecodes des Bedienungspersonals in das mit einer entsprechenden Eingabeeinrichtung ausgestattete Verkaufsgerät eingegeben werden. Daneben ist jedoch auch an den Einsatz anderer, insbesondere automatisch arbeitender Erkennungssysteme zur Erzeugung der benutzerbezogenen Daten gedacht. Ferner können die besonders vertrauenswürdigen und zu Überwachungszwecken einzusetzenden Mitarbeiter auch mit entsprechenden Freigabeschlüsseln, -karten und/oder Transpondern ausgestattet werden, welche zur Erzeugung der Freigabesignale eingesetzt werden.

Alternativ oder zusätzlich können erfindungsgemäß verwendete Waagen auch mit einer Einrichtung zum Erfassen des Betriebszustandes des Gerätes ausgestattet werden, mit der in Abhängigkeit vom erfaßten Betriebszustand die Sichtdarstellung der von den Bildsignalen dargestellten Bilder freigebende Freigabesignale erzeugt werden. Mit derartigen Erfassungseinrichtungen kann beispielsweise erfaßt werden, ob überhaupt eine Bedienungsperson an der entsprechenden waage angemeldet ist, so daß die Freigabesignale und damit auch die Sichtdarstellung der von den Bildsignalen dargestellten Bilder erst dann erzeugt wird, wenn eine entsprechende Anmeldung erfolgt ist. Zusätzlich kann mit dieser Erfassungsvorrichtung auch erfaßt werden, ob die Waage zur Zeit für Verkaufsvorgänge eingesetzt wird, in dem beispielsweise die Belastung einer Wägezelle der Waage erfaßt wird und die Freigabesignale nur dann erzeugt werden, wenn über einen längeren, vorzugsweise frei wählbaren Zeitraum kein Verkaufsvorgang erfaßt wurde. Auf diese Weise kann erreicht werden, daß während des Verkaufsvorganges selbst keine Überwachungsbilder auf der Anzeigeeinrichtung angezeigt werden. Daneben ist jedoch auch an den Einsatz von Ausführungsformen gedacht, bei dem die Überwachungsbilder gleichzeitig mit den warenbezogenen Daten angezeigt werden, um so eine fortlaufende Überwachung zu ermöglichen. Endlich ist auch noch an den Einsatz von Erfassungseinrichtungen gedacht, mit denen die Freigabesignale ansprechend auf die Betätigung entsprechender Eingabeeinrichtungen erzeugt werden, beispielsweise wenn das Bedienungspersonal in einem Verdachtsfall die Verkaufstätigkeit kurzfristig unterbrechen will, um eine verdächtige Situation näher zu beobachten und/oder um einen Alarm auszulösen. Die Bildsignalerzeugungseinrichtung eines erfindungsgemäßen Überwachungssystems kann beispiesweise in Form einer analogen oder digitalen Kamera (Videokamera), oder eines Fotoapparates verwirklicht werden.

Die erfindungsgemäßen, zur Verwendung beim Verkauf von Waren gedachten Geräte können auch in Lagern eingesetzt werden. Auch in diesem Fall kann mit Hilfe dieser Geräte ein Überwachungssystem aufgebaut werden, mit dem beispielsweise Lieferanten oder andere Lagermitarbeiter überwacht werden.

Nachstehend wird die Erfindung unter Bezugnahme auf die Zeichnung, auf die hinsichtlich aller erfindungswesentlichen und in der Beschreibung nicht näher herausgestellte Einzelheiten ausdrücklich verwiesen wird, erläutert. In der Zeichnung zeigt:
- Fig. 1: einen Teil eines mit einem erfindungsgemäßen Überwachungssystem ausgestatteten Verkaufsraums,
- Fig. 2 eine: Ansicht eines erfindungsgemäß verwendbaren Verkaufsgerätes in Form einer Waage und
- Fig. 3 bis 7: verschiedene Ausführungsformen erfindungsgemäßer Überwachungssysteme.

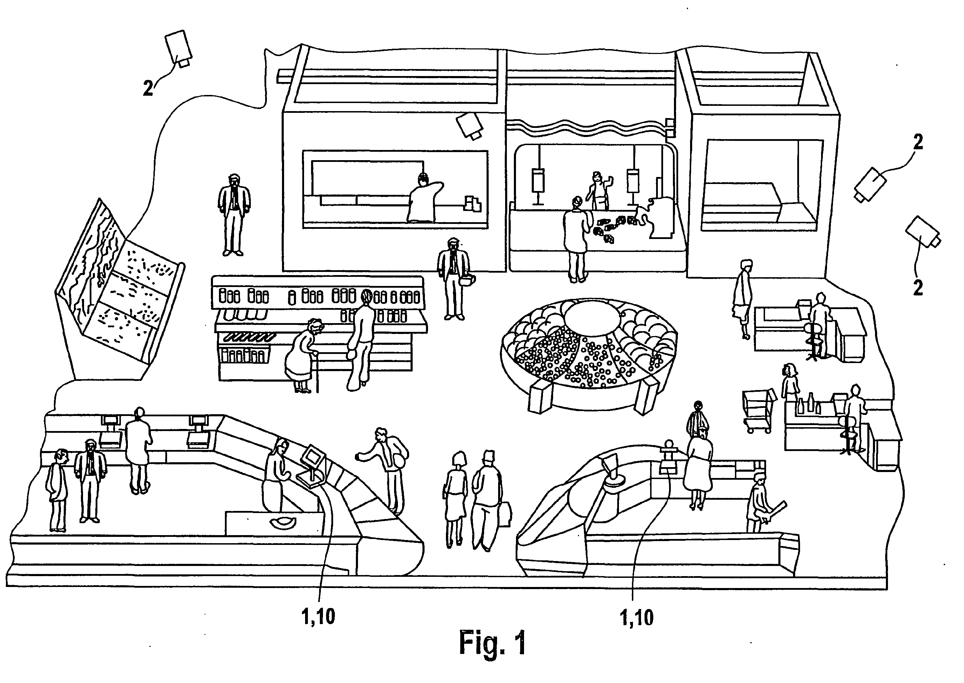

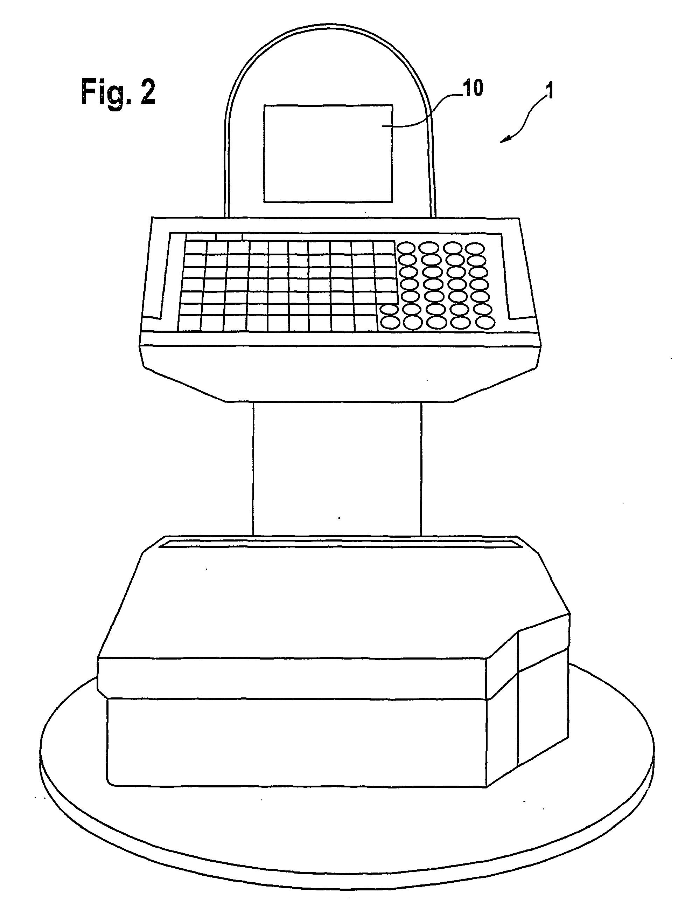

Das in Fig. 2 schematisch dargestellte Überwachungssystem umfaßt insgesamt vier Überwachungsüberwachungskameras 2 und eine Vielzahl von erfindungsgemäßen Geräten 1 in Form von Waagen und Registrierkassen. Dabei werden die von den Überwachungskameras erzeugten Bildsignale an eine gesonderte, in der Zeichnung nicht dargestellte zentrale Übertragungseinrichtung angelegt und von dort an die einzelnen Waagen weitergeleitet. An diesen jeweils mit einer Anzeigeeinrichtung 10 ausgestatteten Waagen 1 werden die von den daran angelegten Bildsignalen dargestellten Bilder dargestellt, sobald sich Verkaufspersonal daran angemeldet hat und über einen längeren Zeitraum kein Verkaufsvorgang festgestellt wurde. Darüber hinaus sind die einzelnen Waagen auch noch mit von dem Bedienungspersonal betätigbaren Eingabeeinrichtungen ausgestattet, mit denen auch während eines Verkaufsvorgangs eine Sichtdarstellung der von den Bildsignalen dargestellten Bilder auf den Anzeigeeinrichtungen 10 ausgelöst werden kann, falls eine verdächtige Situation festgestellt wird. Die einzelnen erfindungsgemäßen Waagen sind mit entsprechenden, die Bildsignale empfangenden Treiberschaltungen ausgestattet, mit denen die Anzeigeeinrichtungen 10 zur Sichtdarstellung der von den Bildsignalen dargestellten Bilder angesteuert werden können. Neben den in der Fig. 1 dargestellten Waagen kann das erfindungsgemäße Überwachungssystems auch noch eine oder mehrere kombinierte Wäge- und Kassenvorrichtungen aufweisen. Die einzelnen Waagen können mit Anzeigevorrichtungen in Form von Kathodenstrahlröhren oder Plasmabildschirmen ausgestattet sein. Bei der in den Fig. 1 und 2 dargestellten bevorzugten Ausführungsform sind die Anzeigeeinrichtungen in Form von Flüssigkristallbildschirmen verwirklicht. Bei den in der Zeichnung dargestellten Waagen werden die Bildsignale über entsprechende Signalleitungen angelegt. Daneben können die Bildsignale jedoch auch drahtlos übertragen werden.

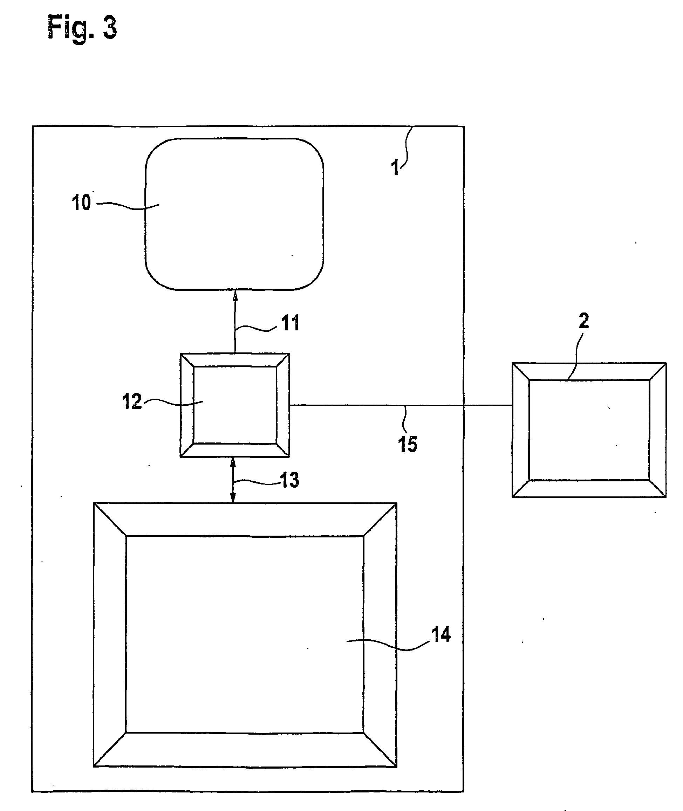

Das in Fig. 3 dargestellte Überwachungssystem besteht im wesentlichen aus einer Waage und einer Signalquelle, wie etwa einer Videokamera, einem Fotoapparat o. dgl. Die Waage umfaßt eine zentrale Steuereinrichtung 14, mit der warenbezogene Daten, wie etwa das Gewicht von Waren darstellende Daten erzeugt werden. Diese warenbezogenen Daten werden über einen Bus 13 an eine in Form eines Grafik-Subsystems verwirklichte Treiberschaltung 12 für die Anzeigeeinrichtung 10 angelegt. In dem Grafik-Subsystem werden die Bilddarstellung der warenbezogenen Daten mit der Anzeigeeinrichtung 10 veranlassende Anzeigesignale erzeugt und über eine Signalleitung 11 an die Anzeigeeinrichtung 10 angelegt. Darüber hinaus empfängt das Grafik-Subsystem 12 auch noch über einen Videoeingang (nicht dargestellt) und eine entsprechende Signalleitung 15 daran angelegte Bildsignale von der Signalquelle 2.

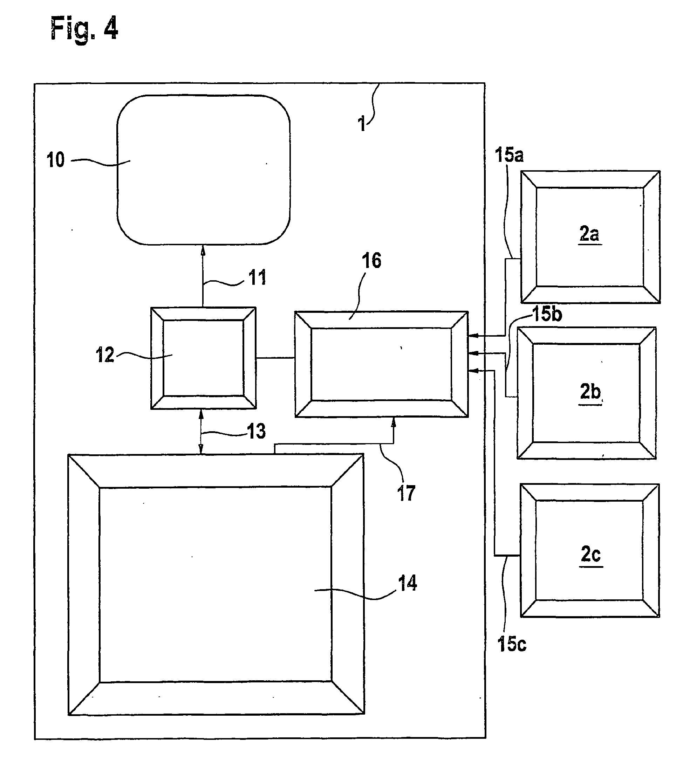

Die in Fig. 4 dargestellte Ausführungsform unterscheidet sich im wesentlichen nur dadurch von der anhand der Fig. 3 erläuerten Ausführungsform, daß die Waage 1 zur Erzeugung einer Bilddarstellung der von insgesamt drei Signalquellen 2a, 2b und 2c stammenden Bildsignale ausgelegt ist. Dazu weist die Waage 1 eine zusätzliche Wähleinrichtung 16 auf, an die die von den Signalquellen 2a, 2b und 2c stammenden Bildsignale über Signalleitungen 15a, 15b und 15c angelegt werden. Mit der zentralen Steuereinrichtung 14 werden Steuersignale erzeugt und über eine Signalleitung 17 an die Wähleinrichtung 16 angelegt. In Abhängigkeit von den über die Signalleitung 17 angelegten Steuersignalen wird mit der Wähleinrichtung 16 eines odere mehrere der über die Bildsignalleitungen 15a, 15b und 15c angelegten Bildsignale an das Grafik-Subsystem 12 bzw. die Treiberschaltung angelegt. Mit der Treiberschaltung 12 werden dann die Sichtdarstellung der mit der Wähleinrichtung 16 gewählten Bilder durch die Anzeigeeinrichtung 10 veranlaßende Anzeigesignale erzeugt und über die Signalleitung 11 die Anzeigeeinrichtung 10 angelegt.

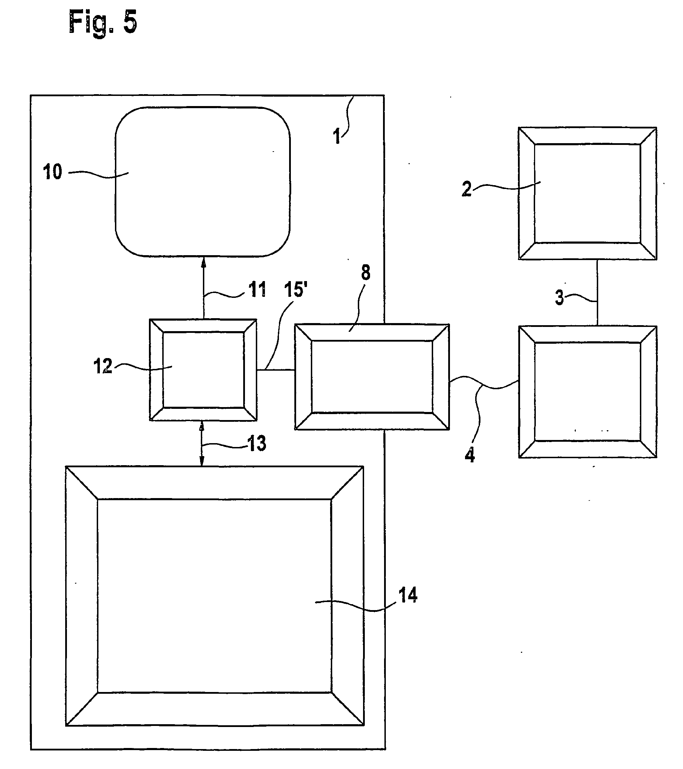

Die in Fig. 5 dargestellte Ausführungsform der Erfindung entspricht im wesentlichen der anhand der Fig. 3 dargestellten Ausführungsform. Allerdings werden die Bildsignale bei der in Fig. 5 dargestellten Ausführungsform zuächst von der Signalquelle 2 über eine Signalleitung 3 an eine Wandlereinrichtung 4 angelegt. Die Wandlereinrichtung 4 umfaßt einen Sender, der zur drahtlosen Übertragung von den Bildsignalen entsprechenden Signalen ausgelegt ist. Dazu werden die über die Signalleitung 3 angelegten Bildsignale in entsprechende Funk-oder Infrarotsignale umgewandelt und an die Waage 1 gesendet. Die Waage 1 ist mit einem zum Empfang dieser Funk- bzw. Infrarotsignal geeigneten Empfangseinrichtung 8 ausgestattet. Mit der Empfangseinrichtung 8 werden auf Grundlage der drahtlos übertragenen Signale wiederum Bildsignale erzeugt und über eine Signalleitung 15' an die Treiberschaltung 12 angelegt.

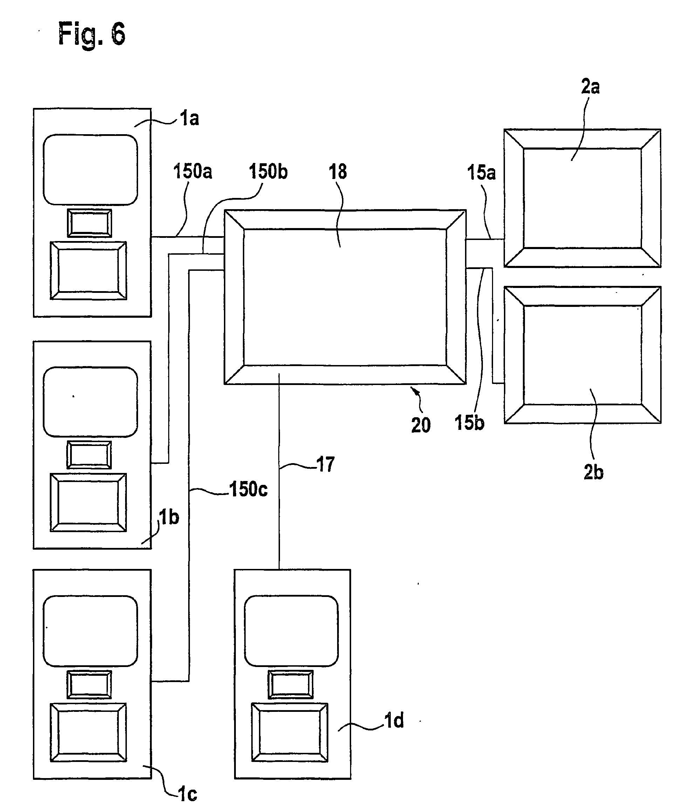

Die in Fig. 6 dargestellte Ausführungsform der Erfindung umfaßt insgesamt vier Waagen 1a, 1b, 1c und 1d sowie zwei Signalquellen 2a und 2b. Die von den Signalquellen 2a und 2b stammenden Bildsignale werden über Signalleitungen 15a und 15b an eine zentrale Überwachungseinrichtung 20 angelegt. Die zentrale Überwachungseinrichtung 20 umfaßt eine Wähleinrichtung 16', mit der bestimmt wird, welche Bildsignale an welche Waage angelegt werden. In Abhängigkeit von entsprechenden von der Wähleinrichtung 16' erzeugten Steuersignalen wird mit Hilfe einer in der zentralen Überwachungseinheit enthaltenen Übertragungseinrichtung 18 die Weiterleitung der Bildsignale an die entsprechenden Waagen veranlaßt. Dabei kann die zentrale Überwachungseinheit mit Hilfe einer der Waagen, in der Zeichnung mit Hilfe der Waage 1d, gesteuert werden. In diesem Fall wird die Waage 1d sowohl zur Ermittlung warenbezogener Daten, als auch zur Sichtdarstellung der von Bildsignalen dargestellten Bilder, als auch zum Auswählen derjenigen Signalquelle eingesetzt, deren Bildsignale zur Ansteuerung der Anzeigeeinrichtungen der anderen Waagen 1a, 1b und 1c benutzt werden sollen.

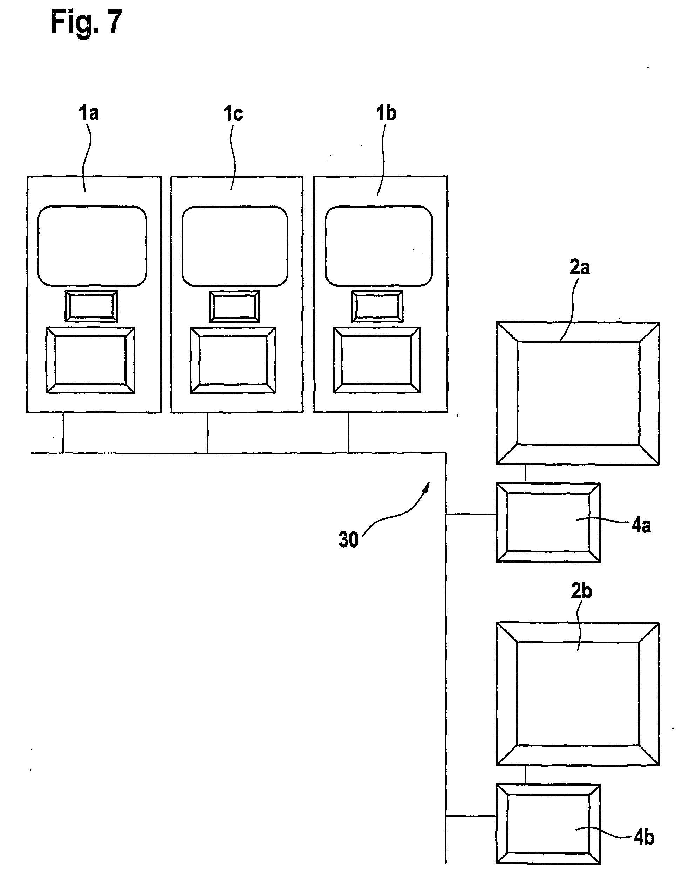

Die in Fig. 7 dargestellte Ausführungsform der Erfindung umfaßt drei Waagen 1a, 1b und 1c sowie zwei Signalquellen 2a und 2b. Bei dieser Ausführungsform sind alle Waagen und Signalquellen an ein ggf. bereits vorhandenes Netzwerk 30 angeschlossen. Dieses Netzwerk kann beispielsweise in Form eines LAN, eines Funk-Netzwerks, eines Infrarotnetzwerkes oder auch durch das Internet verwirklicht sein. Die von den Signalquellen 2a und 2b stammenden Bildsignale werden mit Hilfe entsprechender Wandlerschaltungen 4a und 4b in mit dem Netzwerk 30 kompatible Daten umgewandelt und über das Netzwerk 30 an die Waagen angelegt, in denen dann die Sichtdarstellung der von den Bildsignalen dargestellten Bilder erfolgen kann. Dazu kann beispielsweise eine Übertragungs-und Wähleinrichtung der in Fig. 6 dargestellten Art zur Auswahl der Bildsignale für die einzelnen Waagen eingesetzt werden. Daneben kann jede einzelne der Waagen aber auch eine eigene Wähleinrichtung der in Fig. 4 dargestellten Art umfassen. Bei Verwendung einer drahtlosen Signalübertragung können die Wandlereinrichtungen 4a und 4b der anhand der Fig. 5 für die Wandlereinrichtung 4 erläuterten Weise verwirklicht sein, wobei jede der Waagen auch noch eine Empfangseinrichtung der anhand der Fig. 5 erläuterten Art umfassen kann.

Bei Einsatz der Waagen zur Herstellung eines erfindungsgemäßen Überwachungssystems kann das die Wägevorrichtungen bedienende Personal gleichzeitig als Überwachungspersonal tätig werden. Diese Überwachung kann vom Bedienungspersonal neben der Tätigkeit des Abwägens von Waren und/oder Gütern durchgeführt werden. Auf diese Weise wird die Anzahl der Überwachungsposten sowie die Anzahl des Überwachungspersonals ohne Erhöhung des benötigten Personals insgesamt erhöht, was die Wirksamkeit des Überwachungssystems verbessert und die Diebstahlsquote senkt.

Mit dem erfindungsgemäßen Überwachungssystem ist es möglich, eine Vielzahl kostengünstiger Überwachungsvorrichtungen im zu überwachenden Geschäft bzw. Lager zu installieren und gefährdete Bereiche durch Bedienungspersonal an Wägevorrichtungen zu überwachen. In einem unter Verwendung von Waagen aufgebauten Überwachungssystem zeigt eine Vielzahl von Wägevorrichtungen Überwachungsbilder an, so daß eine zeitlich permanente und räumlich lückenlose Überwachung erfolgt.

## Patentansprüche

1. Überwachungssystem mit mindestens einer Einrichtung (2) zum Erzeugen von Bilder zumindest eines Teils eines Geschäfts oder Lagers darstellenden Bildsignalen, einer Anzeigeeinrichtung (10) und einer die Bildsignale empfangenden und die Anzeigeeinrichtung (10) zur Sichtdarstellung der von diesen Bildsignalen dargestellten Bilder ansteuernden Treiberschaltung (12), **dadurch gekennzeichnet, daß** die Anzeigeeinrichtung Bestandteil einer Waage (1) zur Verwendung bei einem Verkauf von Waren in einem Geschäft oder in einem Lager mit einer zum Erzeugen von warenbezogenen Signalen in Form von das Gewicht der Waren darstellenden Signalen betreibbaren Einrichtung ist und zur Sichtdarstellung der von den warenbezogenen Signalen dargestellten warenbezogenen Daten betreibbar ist.

2. Überwachungssystem nach Anspruch 1, **dadurch gekennzeichnet, daß** die Treiberschaltung (12) zum Empfangen von Bildsignalen von mindestens zwei Signalquellen (2a, 2b, 2c) und zum Ansteuern der Anzeigeeinrichtung (10) zur Sichtdarstellung der von den Bildsignalen einer oder mehrerer Signalquellen (2a, 2b, 2c) dargestellten Bilder betreibbar ist.

3. Überwachungssystem nach Anspruch 1 oder 2, **dadurch gekennzeichnet, daß** der Treiberschaltung (12) eine Übertragungseinrichtung (18) vorgeschaltet ist, mit der die Bildsignale an die Treiberschaltung (12) übertragen werden.

4. Überwachungssystem nach Anspruch 3, **dadurch gekennzeichnet, daß** die Übertragungseinrichtung (18) zum selektiven Übertragen der Bildsignale mehrerer Signalquellen (2a, 2b, 2c) an die Treiberschaltung (12) oder im Fall der Verwendung weiterer Waagen mit jeweiliger Anzeigeeinrichtung und jeweils zugeordneter Treibschaltung zusätzlich an die weiteren Treiberschaltungen (12) ausgelegt ist.

5. Überwachungssystem nach einem der Ansprüche 2 bis 4, **dadurch gekennzeichnet, daß** die Waage (1) eine Wähleinrichtung (16, 16') zum Auswählen derjenigen Signalquelle (2a, 2b, 2c) aufweist, deren Bildsignale zur Ansteuerung der Anzeigeeinrichtung (10) benutzt werden.

6. Überwachungssystem nach Anspruch 5, **dadurch gekennzeichnet, daß** die Wähleinrichtung (16, 16') zum Auswählen derjenigen Signalquelle (2a, 2b, 2c) betreibbar ist, deren Bildsignale zur Ansteuerung der Anzeigeeinrichtung (10) einer weiteren Waage (1) benutzt werden.

7. Überwachungssystem nach einem der vorhergehenden Ansprüche, **gekennzeichnet durch** eine benutzerbezogene, datenempfangende Freigabeeinrichtung, mit der in Abhängigkeit von den benutzerbezogenen Daten die Sichtdarstellung der von den Bildsignalen dargestellten Bilder freigebende Freigabesignale erzeugt werden.

8. Überwachungssystem nach einem der vorhergehenden Ansprüche, **gekennzeichnet durch** eine Einrichtung zum Erfassen des Betriebszustands der Waage (1), mit der in Abhängigkeit von dem erfaßten Betriebszustand die Sichtdarstellung der von den Bildsignalen dargestellten Bilder freigebende Freigabesignale erzeugt werden.

9. Überwachungssystem nach einem der vorhergehenden Ansprüche, **gekennzeichnet durch** eine Eingabeeinrichtung zum Erzeugen von den Preis der Waren darstellenden warenbezogenen Signalen.

10. Überwachungssystem nach einem der vorhergehenden Ansprüche, **gekennzeichnet durch** ein Netzwerk, wie etwa ein Intranet, das Internet oder LAN-Verbindungen, zum Übertragen der Bildsignale.

## Claims

1. A surveillance system comprising at least one device (2) for generating image signals showing images of at least one part of a shop or warehouse, a display device (10) and a driver circuit (12) receiving the image signals and controlling the display device (10) for the visual presentation of the images shown by these image signals, **characterised in that** the display device is a component part of a set of scales (1) for use when selling goods in a shop or in a warehouse with a device that can be operated to generate goods-related signals in the form of signals showing the weight of the goods, and that can be operated to visually present the goods-related data shown by the goods-related signals.

2. The surveillance system according to Claim 1, **characterised in that** the driver circuit (12) can be operated to receive image signals from at least two signal sources (2a, 2b, 2c) and for controlling the display device (10) for the visual presentation of the images shown by the image signals or one or more signal sources (2a, 2b, 2c).

3. The surveillance system according to Claim 1 or 2, **characterised in that** a transmission device (18), with which the image signals are transmitted to the driver circuit (12), is connected upstream of the driver circuit (12).

4. The surveillance system according to Claim 3, **characterised in that** the transmission device (18) is designed to selectively transmit the image signals of a number of signal sources (2a, 2b, 2c) to the driver circuit (12), or in the case of using further sets of scales with a respective display device and a respectively assigned driver circuit additionally to the driver circuits (12).

5. The surveillance system according to any of Claims 2 to 4, **characterised in that** the set of scales (1) has a selecting device (16, 16') for selecting the signal source (2a, 2b, 2c) the image signals of which are used to control the display device (10).

6. The surveillance system according to Claim 5, **characterised in that** the selecting device (16, 16') can be operated to select the signal source (2a, 2b, 2c) the image signals of which are used to control the display device (10) of a further set of scales (1).

7. The surveillance system according to any of the preceding claims, **characterised by** a user-related, data-receiving release device with which the visual presentation of the release signals released by the images shown by the image signals can be generated dependently upon the user-related data.

8. The surveillance system according to any of the preceding claims, **characterised by** a device for detecting the operational state of the set of scales (1) with which the visual presentation of the release signals released by the images shown by the image signals are generated dependently upon the operational state detected.

9. The surveillance system according to any of the preceding claims, **characterised by** an input device for generating goods-related signals showing the price of the goods.

10. The surveillance system according to any of the preceding claims, **characterised by** a network, such as for example an Intranet, the Internet or LAN connections, for transmitting the image signals.

## Revendications

1. Système de surveillance comportant au moins un dispositif (2) permettant de générer des signaux représentant des images d'au moins une partie d'un magasin ou d'un entrepôt, un dispositif d'affichage (10) et un circuit de commande (12) qui reçoit les signaux d'image et qui commande le dispositif d'affichage (10) pour offrir une représentation visuelle des images représentées par ces signaux d'image, **caractérisé en ce que** le dispositif d'affichage fait partie d'une balance (1) qui est utilisée dans le cadre de la vente de marchandise dans un magasin ou dans un entrepôt et qui comporte un dispositif permettant de générer des signaux liés à la marchandise sous la forme de signaux représentatifs du poids des marchandises et qui permet une représentation visuelle des données liées à la marchandise représentées par les signaux liés à la marchandise.

2. Système de surveillance selon la revendication 1, **caractérisé en ce que** le circuit de commande (12) permet de recevoir des signaux d'image provenant d'au moins deux sources de signaux (2a, 2b, 2c) et de commander le dispositif d'affichage (10) pour offrir une représentation visuelle des images représentées par les signaux d'image provenant d'une ou de plusieurs sources de signaux (2a, 2b, 2c).

3. Système de surveillance selon la revendication 1 ou 2, **caractérisé en ce qu'**un dispositif de transmission (18) est monté en amont du circuit de commande (12) pour transmettre les signaux d'image au circuit de commande (12).

4. Système de surveillance selon la revendication 3, **caractérisé en ce que** le dispositif de transmission (18) est conçu pour transmettre les signaux d'image de plusieurs sources de signaux (2a, 2b, 2c) de manière sélective au circuit de commande (12) ou, dans le cas de l'emploi de balances supplémentaires munies chacune d'un dispositif d'affichage respectif et d'un circuit de commande coordonné respectif, pour encore transmettre ces signaux d'image aux circuits de commande (12) supplémentaires.

5. Système de surveillance selon l'une des revendications 2 à 4, **caractérisé en ce que** la balance (1) présente un dispositif de sélection (16, 16') permettant de sélectionner la source de signaux (2a, 2b, 2c) dont les signaux d'image servent à la commande du dispositif d'affichage (10).

6. Système de surveillance selon la revendication 5, **caractérisé en ce que** le dispositif de sélection (16, 16') permet de sélectionner la source de signaux (2a, 2b, 2c) dont les signaux d'image sont utilisés pour commander le dispositif d'affichage (10) d'une balance (1) supplémentaire.

7. Système de surveillance selon l'une des revendications précédentes, **caractérisé par** un dispositif de déclenchement lié à l'utilisateur et recevant des données qui permet, en relation avec des données liées à l'utilisateur, de générer des signaux de déclenchement déclenchant la représentation visuelle des images représentées par les signaux d'image.

8. Système de surveillance selon l'une des revendications précédentes, **caractérisé par** un dispositif de détection de l'état de fonctionnement de la balance (1) qui permet, en relation avec l'état de fonctionnement détecté, de générer des signaux de déclenchement déclenchant la représentation visuelle des images représentées par les signaux d'image.

9. Système de surveillance selon l'une des revendications précédentes, **caractérisé par** un dispositif d'entrée permettant de générer des signaux liés à la marchandise représentant le prix des marchandises.

10. Système de surveillance selon l'une des revendications précédentes, **caractérisé par** un réseau, comme par exemple un système Intranet, l'Internet ou des liaisons LAN, servant à transmettre les signaux d'image.
